# FASCICULE DE BREVET EUROPEEN

(11) **EP 1 072 672 B1**
(45) Date de publication et mention de la délivrance du brevet: **28.10.2009**
(21) Numéro de dépôt: 00402139.0
(22) Date de dépôt: 26.07.2000
(51) Int. Cl.: C10L 3/10, B01D 53/14

(54) **Procédé et installation de purification d'un gaz**
Verfahren und Vorrichtung zur Reinigung von Gasen
Process and device for gas purification

(30) Priorité: 28.07.1999 FR 9909807
(43) Date de publication de la demande: 31.01.2001
(73) Titulaire: TECHNIP, 92400 Courbevoie (FR)
(72) Inventeur: Paradowski, Henri, 95000 Cergy-Pontoise (FR)
(74) Mandataire: Jacobson, Claude

(56) Documents cités:
- EP-A- 0 395 490
- US-A- 4 421 535
- US-A- 5 659 109

## Description

La présente invention concerne généralement et a essentiellement pour objet un procédé selon le préambule de la revendication 1.

On sait que le fluide gazeux, formant l'effluent d'un gisement de gaz naturel, contient généralement des substances malodorantes formées principalement de mercaptans tels que par exemple :
- le méthylmercaptan ou méthane-thiol de formule chimique CH₄S, très volatil qui bout à 5,9° C,
- l'éthylmercaptan ou éthane-thiol de formule chimique C₂H₆S, moins volatil, qui bout à 35° C,
- les propane-thiols comprenant en particulier l'isopropylmercaptan et le n-propylmercaptan, et
- des mercaptans de plus en plus lourds donc de moins en moins volatils.

La présence de mercaptans dans le gaz naturel extrait d'un gisement présente l'inconvénient, pour le gaz naturel, d'une part d'une mauvaise odeur, d'autre part d'être très toxique et enfin de contenir des impuretés susceptibles d'être décomposées en hydrogène sulfuré et disulfures donc d'être corrosif notamment pour les tuyauteries de transport d'un tel fluide.

Un problème technique connu consiste, à partir de l'effluent d'un gisement de gaz naturel, à obtenir d'une part un gaz naturel dans lequel la teneur en mercaptans à été abaissée à 10 parties par million, de façon qu'il soit utilisable selon les spécifications commerciales pour son transport par gazoduc vers le client utilisateur ou le distributeur et, d'autre part, des produits de récupération constitués en particulier par des essences stabilisées formées par des hydrocarbures en C₅ et plus lourds.

Dans l'état de la technique antérieure, ce problème technique connu peut être résolu notamment par l'un des trois procédés suivants :
1) Le procédé par adsorption sur tamis moléculaire à une pression effective d'environ 60 bar.
   Ce procédé présente l'inconvénient de produire un gaz provenant de la régénération de l'adsorbant et riche en mercaptans (c'est-à-dire contenant environ 20 fois la teneur en mercaptans du gaz à traiter) dont le rejet est interdit par les règlements locaux de protection de l'environnement et qui représente soit des pertes de gaz, soit un coût prohibitif de traitement ultérieur.
2) Le procédé par absorption sous haute pression (par exemple 60 bar) dans un hydrocarbure lourd, par exemple en C₇ ou plus lourd.
   Ce procédé présente l'inconvénient d'obtenir des produits intermédiaires, à base de propane par exemple, qu'il n'est pas toujours possible de valoriser et qu'il faut donc réinjecter dans le gaz purifié avec circulation de grosses quantités de solvants d'hydrocarbures en C₇ et plus lourds, d'où augmentation du coût de l'absorbeur et la mise en oeuvre de grandes quantités de chaleur pour les rebouilleurs et de réfrigération pour les refroidisseurs.
3) Le procédé par traitement cryogénique dont un mode de fonctionnement fréquent présente l'inconvénient de détendre le gaz de charge qu'il faudra donc recomprimer pour le délivrer au gazoduc de distribution et d'obtenir encore des produits intermédiaires, à base de propane par exemple qu'il n'est pas toujours possible de valoriser et qu'il faut donc réinjecter dans le gaz purifié d'où nécessité d'employer plusieurs compresseurs coûteux en équipement et en énergie absorbée ainsi qu'un séchage très poussé du gaz de charge abaissant sa teneur en humidité à moins de 0,1 partie par million.
   Un tel procédé de traitement cryogénique est révélé par exemple par :
   - le brevet US 3 763 658 publié le 9 Octobre 1973 qui présente l'inconvénient d'un coût d'exploitation élevé de son objet notamment aux pressions opératoires élevées ;
   - le brevet US 5 659 109 publié le 19 Août 1997 dont le coût d'exploitation de son objet est nettement moins élevé aux pressions opératoires élevées que celui du brevet précédent, ce qui représente donc une amélioration sensible de l'objet de ce dernier.

Le but principal de la présente invention est de supprimer les inconvénients en particulier des procédés connus précités tout en conservant leurs avantages propres en créant un procédé permettant d'éviter de produire du propane, par exemple, lorsque ce produit n'est pas souhaité, d'éviter de détendre le gaz de charge et d'éviter d'utiliser de grosses quantités d'huile d'absorption en particulier à base d'hydrocarbures en C₇ et plus lourds. L'invention représente donc la solution d'un problème technique qui est nouveau en raison de sa définition spécifique précitée. L'invention offre ainsi l'avantage important d'un coût d'exploitation très inférieur à celui des procédés connus précités et représente donc un perfectionnement ou progrès sensible vis-à-vis de ces procédés connus.

A cet effet, le procédé conforme à l'invention est défini par la revendication 1.

Au sens de la présente description, les composés les plus volatils du gaz de charge seront considérés comme exempts de mercaptans dès lors que leur teneur en mercaptans sera inférieure à 30 ppm Par ailleurs, l'essence liquide traitée par adoucissement sera considérée comme ne contenant plus de mercaptans volatils dès lors que sa teneur en mercaptans volatils sera inférieure à 5 ppm, et de préférence inférieure à 1 ppm.

Selon une autre caractéristique de l'invention, le procédé selon l'invention comprend une ou plusieurs des caractéristiques des revendications 2 à 9.

Le produit de tête de la colonne de fractionnement sera considéré comme exempt de mercaptans dès lors que sa teneur en mercaptans sera inférieure à 30 ppm.

Un mélange d'hydrocarbures en C₃, exempt de mercaptans, comprend une teneur en mercaptans inférieure à 5 ppm, et de préférence à 1 ppm.

Un mélange d'hydrocarbures en C₄, exempt de mercaptans, présente une teneur en mercaptans inférieure à 5 ppm, et de préférence à 1 ppm.

L'invention vise enfin une installation selon la revendication 10.

Selon une autre caractéristique de l'invention, l'installation comprend une ou plusieurs des caractéristiques des revendications 11 à 14.

Ainsi, les résultats obtenus par l'invention procurent des avantages importants constitués par une simplification et une économie substantielles dans la réalisation et la technologie des équipements et des méthodes de leur mise en oeuvre.

L'invention sera mieux comprise et d'autres buts, caractéristiques, détails et avantages de celle-ci apparaîtront plus clairement au cours de la description explicative qui va suivre en se référant aux dessins schématiques annexés, donnés uniquement à titre d'exemple non limitatif.

La figure 1 représente un schéma synoptique fonctionnel d'une installation conforme à un mode de réalisation spécifique actuellement préféré de l'invention.

La figure 2 illustre graphiquement, par un diagramme comparatif, les gains en coût d'exploitation obtenus par les procédés cryogéniques d'élimination de mercaptans d'un gaz naturel conformes respectivement à l'invention et aux deux autres procédés antérieurement connus précités.

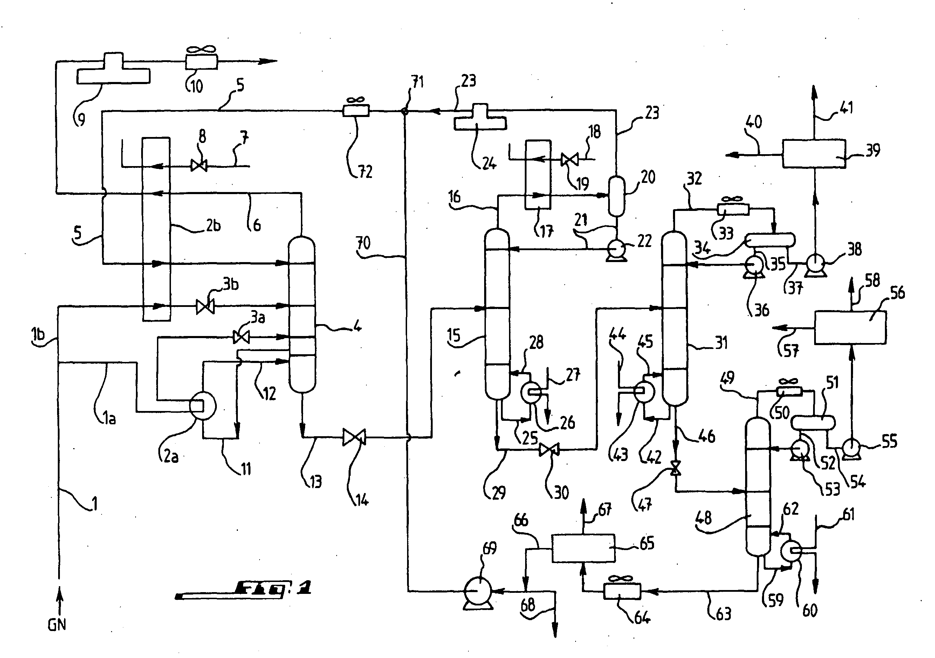

En se reportant à la figure 1, l'installation représentée est destinée à traiter, en particulier à épurer, un gaz de charge GN provenant d'un gisement de gaz naturel.

Ce gaz de charge, prétraité et préalablement séché jusqu'à une teneur d'humidité résiduelle d'environ 5 parties par million. par exemple, arrive à l'installation par la conduite principale 1 par exemple à une température de 25°C et une pression effective de 65 bar.

Ce courant principal de gaz de charge est subdivisé en deux courants partiels s'écoulant respectivement dans deux conduites dérivées 1a et 1b et traversant respectivement deux échangeurs de chaleur 2a et 2b et deux vannes de distribution 3a et 3b avant d'alimenter une colonne d'absorption 4.

Le courant partiel de gaz de charge s'écoulant dans la conduite dérivée la est préalablement refroidi, par exemple à -7°C, par échange de chaleur avec une partie du produit de fond de la colonne d'absorption 4 dans l'échangeur 2a pour aboutir à travers la vanne de distribution 3a à la partie inférieure de la colonne d'absorption 4 tandis que l'autre courant partiel de gaz de charge, s'écoulant dans la conduite dérivée 1b, est préalablement refroidi, par exemple à -35°C, en traversant un échangeur de chaleur 2b et une vanne de distribution 3b pour aboutir dans une partie intermédiaire de la colonne d'absorption 4.

Dans cette colonne d'absorption 4 règnent donc une température d'environ -30°C et une pression effective d'environ 60 bar. Il est à noter que le fluide, véhiculé par la conduite de dérivation 1b, se condense partiellement lors de son refroidissement dans l'échangeur de chaleur 2b.

A la partie supérieure de la colonne d'absorption 4 aboutit également une conduite de reflux 5 après avoir traversé l'échangeur de chaleur 2b dans lequel le fluide de reflux, arrivant sous une pression effective d'environ 60 bar, est également refroidi à -35°C.

Le gaz naturel épuré, c'est-à-dire débarrassé de ses mercaptans, s'accumule en tête de la colonne d'absorption 4 et est évacué de celle-ci par une conduite de sortie 6 traversant l'échangeur de chaleur 2b en sens inverse des fluides circulant respectivement dans les conduites 1b et 5, et dans lequel échangeur thermique 2b le gaz naturel épuré de la conduite de sortie 6, étant à une température d'environ -40°C, sert de fluide réfrigérant, avantageusement conjointement avec l'assistance d'un fluide réfrigérant d'appoint, tel que par exemple un hydrocarbure en C₃ formant propane liquéfié, circulant dans une conduite d'arrivée 7 et traversant, après détente dans une vanne 8, l'échangeur de chaleur 2b dans le même sens d'écoulement que le gaz traité s'écoulant dans la conduite 6. Par cet échange thermique des fluides réfrigérants respectivement avec le gaz de charge de la conduite 1b et le fluide de reflux de la conduite 5, le gaz naturel épuré de la conduite 6 est réchauffé sensiblement jusqu'à une température d'environ 20°C pour être ensuite véhiculé jusqu'à, par exemple, un poste de recompression 9 et de refroidissement 10, le fluide réfrigérant étant, par exemple, de l'air atmosphérique.

Le gaz naturel épuré est de la sorte ramené à des conditions de pression et de température proches des conditions initiales du gaz de charge, donc compatibles avec les conditions du gazoduc de distribution.

Une partie du produit de fond de la colonne d'absorption 4 alimente par une conduite 11 l'échangeur de chaleur 2a chauffé par le courant dérivé la du gaz de charge. Cet échangeur 2a, formant rebouilleur, produit un mélange de liquide et de gaz qui retourne à la colonne d'absorption 4 par une conduite 12.

Le produit liquide final de fond de la colonne d'absorption 4, contenant des hydrocarbures en C₁, C₂ et plus lourds et les mercaptans de formule chimique générale RSH, est évacué de ladite colonne 4 par une conduite 13 comportant une vanne 14 dans laquelle le produit de fond précité est détendu par exemple jusqu'à une pression effective d'environ 20 bar et alimente, par ladite conduite 13, une colonne de fractionnement 15 en un point intermédiaire de celle-ci. Le produit de tête gazeux, exempt de mercaptans et contenant des hydrocarbures en C₁, C₂ et C₃, quitte la colonne de fractionnement 15 par une conduite 16 traversant un refroidisseur 17 dont le fluide réfrigérant est, par exemple, du propane liquéfié circulant dans une conduite d'arrivée 18 et traversant, après détente dans une vanne 19, l'échangeur de chaleur 17 et où ledit produit de tête se condense partiellement en formant un courant diphasique arrivant par la conduite 16 dans un séparateur de phases 20 dans lequel la phase liquide, s'accumulant dans le fond de celui-ci, en sort par une conduite 21 contenant une pompe de reprise 22 pour retourner dans la partie supérieure de la colonne de fractionnement 15.

La phase gazeuse dans le séparateur de phases 20 sort de la partie supérieure de celui-ci par une conduite 23 contenant un compresseur 24 dans lequel cette phase gazeuse est comprimée jusqu'à la pression effective d'environ 60 bar pour constituer une partie du fluide de reflux précité s'écoulant dans la conduite 5 à laquelle aboutit la conduite de refoulement 23 du compresseur 24.

La colonne de fractionnement 15 fonctionne en dééthaniseur et son liquide de fond contient des hydrocarbures respectivement en C₃ (propane) et plus lourds et les mercaptans de formule chimique générale RSH. Une partie de ce produit liquide de fond quitte le fond de la colonne de fractionnement 15 par une conduite 25 pour alimenter un rebouilleur 26 formant échangeur de chaleur chauffé par un fluide 27 tel que de la vapeur d'eau et destiné à réchauffer et à vaporiser partiellement ledit liquide de fond traversant le rebouilleur 26 d'où la phase mixte, formée d'un mélange de liquide et de vapeur, retourne par une conduite 28 à la partie inférieure de la colonne de fractionnement 15.

L'autre partie du produit liquide de fond de la colonne de fractionnement 15 quitte celle-ci par une conduite 29 contenant une vanne de détente 30 et aboutissant à une zone intermédiaire d'une première colonne de distillation 31 fonctionnant en dépropaniseur et dont le produit de tête gazeux contient le propane et le méthylmercaptan. Ce produit de tête gazeux quitte cette première colonne de distillation 31 par une conduite 32 traversant un refroidisseur 33, dont le fluide réfrigérant est, par exemple, de l'air atmosphérique et dans lequel ledit produit de tête gazeux est totalement condensé, ce condensat liquide parvenant par ladite conduite 32 à l'entrée d'un réservoir de liquide 34. Une partie du produit liquide sort de ce réservoir 34 par une conduite 35 comprenant une pompe de reprise 36 pour alimenter en reflux la partie supérieure de la première colonne de distillation 31 tandis que l'autre partie est amenée par une conduite 37, comprenant une pompe de reprise 38, à l'entrée d'une unité d'adoucissement 39 dans laquelle le méthylmercaptan CH₃SH est séparé, par exemple par lavage à la soude, des hydrocarbures en C₃ (propane) et sort, à l'état mélangé avec l'agent d'adoucissement, par une conduite 40 tandis que lesdits hydrocarbures quittent ladite unité d'adoucissement 39 par une conduite 41.

Le produit liquide de fond de ladite première colonne de distillation 31 contient des hydrocarbures respectivement en C₄ et plus lourds et les mercaptans résiduels sauf le méthylmercaptan. Une partie de ce produit de fond liquide quitte le fond de la première colonne de distillation 31 par une conduite 42 alimentant un rebouilleur 43 où ce produit de fond est réchauffé par un fluide 44 tel que de la vapeur d'eau et y est partiellement vaporisé pour retourner ensuite par une conduite 45 à la partie inférieure de la première colonne de distillation 31.

L'autre partie du produit liquide de fond de la première colonne de distillation 31 sort de celle-ci par une conduite 46 pour traverser une vanne de détente 47 et aboutir à l'entrée d'une seconde colonne de distillation d'essence 48 en une zone intermédiaire de celle-ci. Dans cette seconde colonne de distillation 48, le produit de fond de la première colonne de distillation 31 est fractionné, d'une part, en un produit gazeux de tête constitué respectivement d'hydrocarbures en C₄ (butane) et des mercaptans volatils résiduels et, d'autre part, en un produit liquide de fond contenant des hydrocarbures respectivement en C₅ et plus lourds, ainsi que les mercaptans non volatils.

Le produit gazeux de tête de la seconde colonne de distillation 48 quitte celle-ci par une conduite 49 contenant un refroidisseur 50, dont le fluide réfrigérant est, par exemple, de l'air atmosphérique et où le produit de tête subit une condensation totale pour aboutir à l'entrée d'un réservoir de condensat liquide 51 d'où une partie du condensat liquide sort par une conduite 52 en étant aspiré par une pompe de reprise 53 pour alimenter en reflux la partie supérieure de la seconde colonne de distillation 48 tandis que l'autre partie du condensat liquide est amenée par une conduite 54, comprenant une pompe de reprise 55, à l'entrée d'une unité d'adoucissement 56, similaire à l'unité 39 précitée, pour produire des hydrocarbures en C₄ (butane) exempts de mercaptans et évacués par la conduite 57, les mercaptans volatils résiduels, mélangés à l'agent d'adoucissement, étant évacués par la conduite 58.

Le produit liquide de fond de la seconde colonne de distillation 48, contenant l'essence précitée formée par un mélange d'hydrocarbures respectivement en C₅ et plus lourds et des mercaptans non volatils, quitte en partie le fond de ladite colonne par une conduite 59 alimentant un rebouilleur 60 réchauffé par un fluide 61 tel que de la vapeur d'eau provoquant une vaporisation partielle et d'où le mélange de phases respectivement liquide et gazeuse sort par une conduite 62 pour retourner à la partie inférieure de la seconde colonne de distillation 48.

L'autre partie du produit de fond liquide de la seconde colonne de distillation 48 quitte celle-ci par une conduite 63 contenant un refroidisseur 64, dont le fluide réfrigérant est, par exemple, de l'air atmosphérique, suivi d'une unité d'adoucissement 65 similaire à l'unité 39 précitée, pour produire une essence exempte de mercaptans, évacuée par une conduite 66, les mercaptans non volatils, mélangés à l'agent d'adoucissement, étant évacués par une conduite 67. A la sortie de l'unité d'adoucissement 65, une partie de l'essence produite est extraite par une conduite de dérivation 68 tandis que l'autre partie est reprise par une pompe 69 pour rejoindre, par la conduite de refoulement 70, la conduite de refoulement 23 du compresseur 24 en un point d'embranchement 71 pour s'y réunir en la conduite précitée 5. Ainsi, le produit de fond liquide de la seconde colonne de distillation 48 est mélangé avec le produit de tête gazeux recomprimé de la colonne de fractionnement 15 en une proportion quantitative déterminée, réglée sélectivement par la quantité de produit de fond liquide extraite par la conduite 68. Le mélange précité, qui forme ainsi le fluide de reflux mixte diphasique dans la conduite 5 et qui contient des hydrocarbures respectivement en C₁, C₂, C₃, C₅ et plus lourds et exempt de mercaptans, comprend par exemple de 1% à 30% d'essence en moles (venant de la conduite 70) pour 70% à 99% en moles de composés volatils (venant de la conduite 23). Ce mélange, dont la composition préférée se situe dans la fourchette de 5 à 20% d'essence en moles, traverse un refroidisseur 72, dont le fluide réfrigérant est, par exemple, de l'air atmosphérique pour constituer le fluide renvoyé en reflux par la conduite 5 à la colonne d'absorption 4 après condensation au moins partielle dans l'échangeur de chaleur 2b.

La partie de produit de fond liquide, extraite par la conduite 68, constitue un produit fini.

Le fluide de reflux a par exemple la composition relative suivante exprimée en pourcentage molaire :

| | |
|---|---|
| hydrocarbures en C₁ (méthane) | 44% |
| hydrocarbures en C₂ (éthane) | 26% |
| hydrocarbures en C₃ (propane) | 23% |
| hydrocarbures en C₅ (pentane) | 5% |
| hydrocarbures en C₆ (hexane) | 2% |

Grâce à la présente invention, la quantité recirculée de solvant, constitué par des hydrocarbures respectivement en C₅ et plus lourds, est environ vingt fois plus faible que dans le procédé connu précité à absorption à haute pression dans un hydrocarbure lourd et son rôle est différent de celui dudit procédé connu car, dans la présente invention, il consiste essentiellement à éloigner le gaz de son point critique dans la zone d'absorption de la colonne d'absorption 4 et cet effet d'éloignement est d'autant plus marqué que la fraction d'hydrocarbure recyclée est plus lourde.

Toutes les colonnes respectivement d'absorption, de fractionnement et de distillation précitées sont avantageusement des colonnes du type à plateaux.

Les tableaux ci-après donnent, à titre d'exemple purement indicatif, les compositions respectives du gaz de charge et du gaz traité ainsi que les résultats numériques de calcul de gain et de revenu d'exploitation dans un cas particulier.

Compositions en fractions molaires du gaz de charge et du gaz traité :

| Fraction molaire | gaz de charge | gaz traité |
|---|---|---|
| Eau | 0,000001 | 0,000001 |
| Azote | 0,040000 | 0,041171 |
| Gaz carbonique | 0,010000 | 0,010293 |
| Hydrogène sulfuré | 0,000010 | 0,000010 |
| Méthylmercaptan | 0,000050 | 0,000009 |
| Ethylmercaptan | 0,000170 | 0,000001 |
| Isopropylmercaptan | 0,000050 | 0,000000 |
| N-butylmercaptan | 0,000050 | 0,000000 |
| Méthane | 0,852169 | 0,877160 |
| Ethane | 0,050000 | 0,051458 |
| Propane | 0,020000 | 0,017811 |
| Isobutane | 0,007000 | 0,000859 |
| N-butane | 0,009000 | 0,000434 |
| Isopentane | 0,004000 | 0,000445 |
| N-pentane | 0,003000 | 0,000280 |
| N-hexane | 0,002500 | 0,000078 |
| N-heptane | 0,002000 | 0,000000 |

| | |
|---|---|
| Coût unitaire de la puissance de compression | 0,5 F/kW.h |
| Coût unitaire de la puissance de chauffage | 0,05 F/kW.h |
| Différence de prix entre liquide et gaz | 0,2 F/kg |

| | | |
|---|---|---|
| Pression de tête de colonne | bar abs | 57 |
| Température de réfrigération | °C | -36 |
| Puissance de réfrigération en 7 | kW | 3647 |
| Température de réfrigération en 7 | °C | -24 |
| Puissance de réfrigération en 18 | kW | 3156 |
| Température de réfrigération en 18 | °C | 1,3 |

| Puissance de compression | | |
|---|---|---|
| Puissance de compression de 24 | kW | 564 |
| Puissance de compression de 9 | Kw | 3150 |
| Puissance de compression en 7 | kW | 1798 |
| Puissance de compression en 18 | kW | 930 |
| Total | kW | 6442 |
| Coût de compression | F/h | 3221 |

| Puissance de chauffage | | |
|---|---|---|
| Puissance de 26 | kW | 7891 |
| Puissance de 43 | kW | 2782 |
| Puissance de 60 | kW | 3003 |
| Total | kW | 13676 |
| Coût de chauffage | F/h | 684 |
| | | |
| Coût de compression et chauffage | F/h | 3905 |

| Produits liquides | | |
|---|---|---|
| Propane | kg/h | 2183 |
| Butane | kg/h | 17533 |
| C₅+ | kg/h | 17043 |
| Total C₃+C₄+C₅+ | kg/h | 36759 |
| Gain | F/h | 7352 |
| | | |
| Revenu = gain - coût | F/h | 3447 |

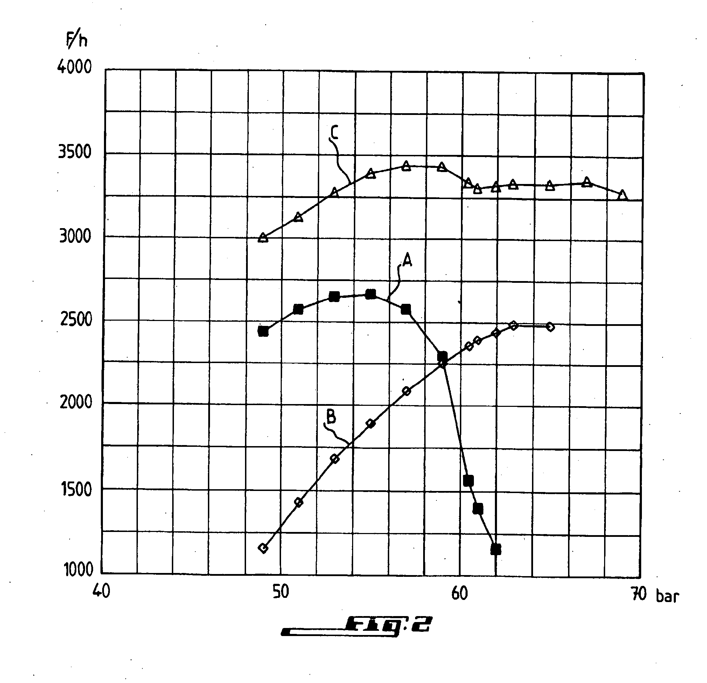

La figure 2 représente un diagramme de comparaison des coûts d'exploitation des procédés cryogéniques d'élimination de mercaptans d'un gaz naturel respectivement selon l'invention et selon chacun des deux procédés connus précités. Ce graphique montre la variation du gain exprimé en francs par heure (F/h) porté en ordonnées en fonction de la pression absolue dans la colonne d'absorption 4 (figure 1) exprimée en bar et portée en abscisses.

Ce graphique représente les trois courbes suivantes :
- la courbe A concernant le procédé de distillation cryogénique simple selon le brevet U.S. 3 763 658 ;
- la courbe B concernant le procédé de distillation cryogénique avec recyclage de C₃/C₄ selon le brevet U.S. 5 659 109 ;
- la courbe C concernant le procédé selon l'invention.

On constate que la courbe C relative à l'invention représente un gain nettement plus grand dans tout le domaine de pressions opératoires indiqué (et en particulier aux hautes pressions) que ceux illustrés respectivement par les courbes B et C.

L'invention n'est nullement limitée aux moyens respectivement décrits et représentés dans la figure 1 des dessins annexés mais couvre toutes les variantes équivalentes et modifications de ceux-ci ainsi que leurs combinaisons dans le cadre des revendications qui suivent.

## Revendications

1. Procédé de purification d'un gaz de charge, notamment un gaz naturel (GN) contenant des hydrocarbures de C₁ à C₅ et plus lourds, pour en éliminer les composés soufrés de type mercaptan volatil sans opérations d'adsorption ou de détente cryogénique du gaz, par exemple dans un turbo-expandeur, dans lequel successivement le gaz de charge (1), préalablement séché et partiellement refroidi (2a, 2b), alimente une colonne d'absorption (4) sous pression qui reçoit un fluide de reflux (5) et dont le produit de tête (6) est du gaz purifié à teneur en mercaptans inférieure à 30 parties par million et dont le produit de fond (13) alimente une colonne de fractionnement (15) séparant en tête les composés les plus volatils (16) du gaz de charge, exempts de mercaptans pour que la teneur en mercaptans du produit de tëte de la colonne de fractionnement soit inférieure à 30 parties par million, de sa fraction essence (29) soutirée en fond et contenant les mercaptans dont les plus volatils sont éliminés en tête (32, 49) d'au moins une colonne de distillation (31, 48) dont le produit de fond final (63), constitué d'essence liquide à mélange d'hydrocarbures respectivement en C₅ et plus lourds et traitée par adoucissement de façon à ne plus contenir de mercaptans volatils pour que la teneur en mercaptans des courants liquides après le traitement d'adoucissement soit inférieur à 5 parties par million, est mélangé (71) en partie aux composés les plus volatils (16, 23) séparés en tête de la colonne de fractionnement (15) et recomprimés (24) du gaz de charge, ce mélange étant refroidi (72, 2b) et envoyé en reflux (5) à la colonne d'absorption (4) pour y constituer ledit fluide de reflux, la colonne de fractionnement (15) fonctionnant en dééthaniseur.

2. Procédé selon la revendication 1, **caractérisé en ce que** le courant principal de gaz de charge (1) est préalablement subdivisé en deux courants dérivés partiels (1a, 1b) dont l'un (1a) préalablement refroidi (2a) alimente la partie inférieure de la colonne précitée d'absorption (4) et dont l'autre (1b) préalablement refroidi (2b) alimente une zone intermédiaire de ladite colonne (4).

3. Procédé selon la revendication 1 ou 2, **caractérisé en ce que** le produit de fond (13) de la colonne précitée d'absorption (4), contenant des hydrocarbures respectivement en C₂ et plus lourds et des mercaptans, est préalablement détendu (14) avant d'alimenter une colonne de fractionnement (15) permettant d'éliminer les mercaptans des composés les plus volatils du gaz de charge.

4. Procédé selon la revendication 3, **caractérisé en ce que** le produit de fond (29) de la colonne de fractionnement (15), contenant des hydrocarbures respectivement en C₃ et plus lourds et des mercaptans, alimente éventuellement, après détente (30), une première colonne de distillation d'essence (31) fonctionnant de préférence en dépropaniseur, et dont le produit de fond (46) contient des hydrocarbures respectivement en C₄ et plus lourds et des mercaptans.

5. Procédé selon l'une des revendications précédentes, **caractérisé en ce que** le produit de fond (46) de la première colonne de distillation (31), contenant des hydrocarbures en C₄ et plus lourds et des mercaptans, alimente, après détente (47), une seconde colonne de distillation (48), fonctionnant de préférence en débutaniseur, et dont le produit de fond (63) contient la fraction essence résiduelle composée d'hydrocarbures en C₅ et plus lourds et des mercaptans non volatils.

6. Procédé selon la revendication 4, **caractérisé en ce que** le produit de tête (16) de ladite colonne de fractionnement (15), exempt de mercaptans et contenant des hydrocarbures en C₁, C₂ et C₃, est refroidi (17) en subissant une condensation partielle puis séparé (20) d'une part en une phase liquide (21) qui est renvoyée en tête de ladite colonne (15) et d'autre part en une phase gazeuse (23) qui est recomprimée (24) avant son mélange précité (71) avec au moins une partie du produit final de distillation de la fraction essence précitée (63, 66, 70) dont l'autre partie est extraite (68).

7. Procédé selon l'une des revendications précédentes, **caractérisé en ce que** le produit de tête (32) de la première colonne de distillation (31), contenant des hydrocarbures en C₃ et du méthylmercaptan, est refroidi (33) en subissant une condensation totale puis séparé en deux courants partiels liquides (35, 37) dont l'un (35) est renvoyé en tête de ladite première colonne de distillation (31) et dont l'autre (37) est soumis à un traitement d'adoucissement (39) pour, d'une part, en éliminer le méthylmercaptan (40) notamment en mélange avec un agent d'adoucissement, et, d'autre part, obtenir un mélange d'hydrocarbures en C₃ (41), exempt de mercaptans.

8. Procédé selon l'une des revendications précédentes, **caractérisé en ce que** le produit de tête (49) de la seconde colonne de distillation (48), contenant respectivement des hydrocarbures en C₄ et les mercaptans volatils résiduels, est refroidi (50) en subissant une condensation totale puis séparé en deux courants partiels liquides (52, 54) dont l'un (52) est renvoyé en tête de ladite seconde colonne de distillation (48) et dont l'autre (54) est soumis à un traitement d'adoucissement (56) pour, d'une part, en éliminer les mercaptans volatils résiduels (57), notamment en mélange avec un agent d'adoucissement, et, d'autre part, obtenir un mélange d'hydrocarbures en C₄ (58), exempt de mercaptans.

9. Procédé selon l'une des revendications précédentes, **caractérisé en ce que** le courant partiel (1b) à refroidir du gaz de charge (1) et le reflux précité (5) sont refroidie (2b), par le gaz (6) issu de la tête de ladite colonne d'absorption (4) ainsi qu'éventuellement par un fluide réfrigérant d'appoint (7), tel que le propane par exemple, lequel gaz (6) provenant de ladite colonne (4) est ainsi réchauffé par échange thermique jusqu'à sensiblement la température ambiante.

10. Installation pour la mise en oeuvre du procédé selon l'une des revendications 1 à 9, **caractérisée en ce qu'**elle comprend une colonne d'absorption (4) sous pression à laquelle sont reliées des conduites d'arrivée respectivement de gaz de charge (1a, 1b) et de reflux (5), la conduite principale (1) d'arrivée de gaz de charge (GN) bifurquant en deux conduites dérivées (1a, 1b) dont l'une (1b) et la conduite de reflux (5) traversent un échangeur de chaleur (2b) dans le même sens, et dont la tête de colonne est relié à une conduite (6) de sortie de gaz traité traversant ledit échangeur de chaleur (2b) de préférence en sens inverse tandis que son fond est relié par une conduite (13) à une colonne de fractionnement (15), le fond de ladite colonne de fractionnement étant relié par une conduite (29) à au moins une colonne de distillation d'essence (31, 48) dont le fond est relié par une conduite de sortie (63, 66, 70) à la conduite de refoulement (23) d'un compresseur (24) dont le côté aspiration est relié par une conduite (16, 23) à la tête de la colonne de fractionnement (15), ladite conduite de sortie (63, 66, 70) et ladite conduite de refoulement (23) se rejoignant (71) en ladite conduite de reflux (5).

11. Installation selon la revendication 10, **caractérisée en ce que** la tête de la colonne de fractionnement précitée (15) est reliée par une conduite (16) à travers un refroidisseur-condenseur (17) à l'entrée d'un séparateur de phases (20) dont la sortie de phase gazeuse est reliée par une conduite (23) au côté aspiration du compresseur précité (24) tandis que sa sortie de phase liquide communique par une conduite (21) avec la partie supérieure de ladite colonne de fractionnement (15).

12. Installation selon la revendication 11, **caractérisée en ce que** le système de distillation d'essence se compose de deux colonnes de distillation en série (31, 48) dont les têtes respectives sont reliées chacune par une conduite respective (32, 49) à travers un refroidisseur-condenseur (33, 50) à l'entrée d'un réservoir de condensat (34, 51) dont la sortie débouche, d'une part, dans une conduite de retour (35, 52) à la partie supérieure de ladite colonne associée (31, 48) et, d'autre part, dans une conduite (37, 54) de départ vers un dispositif de traitement ultérieur ou d'utilisation.

13. Installation selon la revendication 12, **caractérisée en ce que** la conduite de départ précitée (37), afférente à la première colonne de distillation (31), aboutit à l'entrée d'un appareil d'adoucissement (39) dont une sortie (41) est reliée à un réservoir d'hydrocarbures en C₃ tandis que la conduite de départ précitée (54), afférente à la seconde colonne de distillation (48), aboutit à un système d'adoucissement (56) ou d'utilisation d'hydrocarbures en C₄.

14. Installation selon l'une des revendications 10 à 13, **caractérisée par** une conduite de dérivation (68)d'hydrocarbures respectivement en C₅ et plus lourds branchée sur la conduite de sortie (63) du fond de la seconde colonne de distillation (48).

## Claims

1. A process for purifying a charge gas, notably a natural gas (GN) containing C₁ - C₅ and heavier hydrocarbons, in order to eliminate therefrom the sulphurous, volatile mercaptan-type compounds without any operations of adsorption or cryogenic expansion of the gas, for example in a turbo expander, wherein, successively, the charge gas (1), previously dried and partially cooled (2a, 2b), is supplied to a pressurized absorption column (4) which receives a reflux fluid (5) and of which the head product (6) is purified gas with a mercaptan content which is lower than 30 parts per million and whose bottom product (13) is supplied to a fractionating column (15) which separates, at the head, the most volatile compounds (16) of the charge gas, free from mercaptans such that the mercaptan content of the head product of the fractionating column is lower than 30 parts per million, from its gasoline fraction (29) which is drawn at the bottom and contains the mercaptans, the most volatile of which are eliminated at the head (32, 49) of at least one distillation column (31, 48) of which the final bottom product (63), which is comprised of liquid gasoline with a mixture of C₅ and heavier hydrocarbons, respectively, and treated by sweetening in order to no longer contain volatile mercaptans such that the mercaptan content of the liquid streams after the sweetening treatment is lower than 5 parts per million, is mixed (71) in part with the most volatile compounds (16, 23) which are separated at the head of the fractionating column (15) and recompressed (24) from the charge gas, whereby this mixture is cooled (72, 2b) and refluxed (5) back to the absorption column (4) in order to make up said reflux fluid therein, with the fractionating column (15) acting as a de-ethanizer.

2. The process according to Claim 1, **characterised in that** the main stream of charge gas (1) is firstly subdivided into two partial branch streams (1 a, 1 b), one of which (1 a), which is firstly cooled, is supplied to the lower part of the aforementioned absorption column (4) and the other one of which (1 b), which is firstly cooled (2b), is supplied to an intermediate area of said column (4).

3. The process according to Claim 1 or 2, **characterised in that** the bottom product (13) of the aforementioned absorption column (4), which contains C₂ and heavier hydrocarbons, respectively, and mercaptans, is firstly expanded (14) prior to being supplied to a fractionating column (15) which makes it possible to eliminate the mercaptans from the most volatile compounds of the charge gas.

4. The process according to Claim 3, **characterised in that** the bottom product (29) of the fractionating column (15), which contains C₃ and heavier hydrocarbons, respectively, and mercaptans, may be supplied, after expansion (30), to a first gasoline distillation column (31) which preferably acts as a depropanizer and of which the bottom product (46) contains C₄ and heavier hydrocarbons, respectively, and mercaptans.

5. The process according to one of the preceding claims, **characterised in that** the bottom product (46) of the first distillation column (31), which contains C₄ and heavier hydrocarbons and mercaptans, is supplied, after expansion (47), to a second distillation column (48) which preferably acts as a debutanizer and of which the bottom product (63) contains the residual gasoline fraction which is comprised of C₅ and heavier hydrocarbons and non-volatile mercaptans.

6. The process according to Claim 4, **characterised in that** the head product (16) of said fractionating column (15), which is free from mercaptans and contains C₁, C₂ and C₃ hydrocarbons, is cooled (17) by being subjected to a partial condensation, then is separated (20), on the one hand, into a liquid phase (21) which is returned to the head of said column (15) and, on the other hand, into a gaseous phase (23) which is recompressed (24) prior to being mixed (71) as aforementioned with at least part of the final distillation product of the aforementioned gasoline fraction (63, 66, 70) from which the other part is extracted (68).

7. The process according to one of the preceding claims, **characterised in that** the head product (32) of the first distillation column (31), which contains C₃ hydrocarbons and methylmercaptan, is cooled (33) by being subjected to a total condensation, then is separated into two partial liquid streams (35, 37), one of which (35) is returned to the head of said first distillation column (31) and the other one of which (37) is subjected to a sweetening treatment (39) in order, on the one hand, to eliminate the methylmercaptan (40) therefrom, notably mixed with a sweetener, and, on the other hand, to obtain a C₃ hydrocarbon mixture (41), free from mercaptans.

8. The process according to one of the preceding claims, **characterised in that** the head product (49) of the second distillation column (48), which contains C₄ hydrocarbons and the residual volatile mercaptans, respectively, is cooled (50) by being subjected to a total condensation, then is separated into two partial liquid streams (52, 54), one of which (52) is returned to the head of said second distillation column (48) and the other one of which (54) is subjected to a sweetening treatment (56) in order, on the one hand, to eliminate the residual volatile mercaptans (57) therefrom, notably mixed with a sweetener, and, on the other hand, to obtain a C₄ hydrocarbon mixture (41), free from mercaptans.

9. The process according to one of the preceding claims, **characterised in that** the partial stream (1 b), to be cooled, of the charge gas (1) and the aforementioned reflux (5) are cooled (2b) by the gas (6) exiting from the head of said absorption column (4) as well as possibly by an auxiliary refrigerant fluid (7), such as propane for example, which gas (6) from said column (4) is thus heated by heat exchange to substantially ambient temperature.

10. An installation for the implementation of the process according to one of claims 1 to 9, **characterised in that** it includes a pressurised absorption column (4) to which are connected admission pipes for the charge gas (1a, 1 b) and for the reflux (5), respectively, with the main admission pipe (1) for the charge gas (GN) bifurcating into two branch pipes (1a, 1 b), one of which (1 b) and the reflux pipe (5) pass through a heat exchanger (2b) in the same direction, and of which the column head is connected to an outlet pipe (6) for treated gas which passes through said heat exchanger (2b), preferably in the reverse direction, whereas its bottom is connected via a pipe (13) to one fractionating column (15), with the bottom of said fractionating column being connected via a pipe (29) to at least one gasoline distillation column (31, 48) of which the bottom is connected via an outlet pipe (63, 66, 70) to the discharge pipe (23) of a compressor (24) of which the suction side is connected via a pipe (16, 23) to the head of the fractionating column (15), with said outlet pipe (63, 66, 70) and said discharge pipe (23) joining (71) at said reflux pipe (5).

11. The installation according to Claim 10, **characterised in that** the head of the aforementioned fractionating column (15) is connected via a pipe (16) through a cooler-condenser (17) to the inlet of a phase separator (20), of which the gaseous phase outlet is connected via a pipe (23) to the suction side of the aforementioned compressor (24) whereas its liquid phase outlet communicates via a pipe (21) with the upper part of said fractionating column (15).

12. The installation according to Claim 11, **characterised in that** the gasoline distillation system is comprised of two distillation columns arranged in series (31, 48) of which the respective heads are each connected via a respective pipe (32, 49) through a cooler-condenser (33, 50) at the inlet of a condensate reservoir (34, 51), of which the outlet opens, on the one hand, into a return pipe (35, 52) at the upper part of said associated column (31, 48) and, on the other hand, into an intake pipe (37, 54) to a device for subsequent treatment or for use.

13. The installation according to Claim 12, **characterised in that** the aforementioned intake pipe (37), relating to the first distillation column (31), terminates at the inlet of a sweetening apparatus (39), of which one outlet (41) is connected to a C₃ hydrocarbon reservoir whereas the aforementioned intake pipe (54), relating to the second distillation column (48), terminates at a sweetening system (56) or a system for using C₄ hydrocarbons.

14. The installation according to one of Claims 10 to 13, **characterised by** a branch pipe (68) for C₅ and heavier hydrocarbons, respectively, which is coupled to the outlet pipe (63) of the bottom of the second distillation column (48).

## Patentansprüche

1. Verfahren zur Reinigung eines Speisegases, insbesondere eines Erdgases (GN), welches C₁- bis C₃- und höherkettige Kohlenwasserstoffe enthält, um aus diesem Schwefelverbindungen des flüchtigen Mercaptantyps zu entfernen, ohne eine Adsorption oder Kälteexpansion des Gases, wie beispielsweise in einem Turboexpander, durchführen zu müssen, bei welchem nacheinander das Speisegas (1), das vorab getrocknet und zum Teil gekühlt wurde (2a, 2b), in eine Druck-Absorptionskolonne (4) eingespeist wird, die ein Rückflussfluid (5) erhält, und in der das Kopfprodukt (6) das gereinigte Gas mit einem Gehalt an Mercaptanen von weniger als 30 ppm ist und aus der das Bodenprodukt (13) in eine Fraktionskolonne (15) eingespeist wird, in der im Kopfbereich die flüchtigeren Verbindungen (16) des Speisegases, die frei von Mercaptanen sind, damit der Gehalt an Mercaptanen des Kopfprodukts der Fraktionskolonne weniger als 30 ppm beträgt, von der Benzinfraktion (29) abgetrennt werden, die im Bodenbereich abgezogen wurde und die Mercaptane enthält, wobei die flüchtigeren Mercaptane im Kopfbereich (32, 49) wenigstens einer Destillationskolonne (31, 48) entfernt werden, deren finales Bodenprodukt (63), das aus flüssigem Benzin in einer Mischung mit C₅- und höherkettigen Kohlenwasserstoffen besteht und enthärtet ist, um keine flüchtigen Mercaptane mehr zu enthalten, so dass der Gehalt an Mercaptanen der Fluidströme nach der Enthärtung weniger als 5 ppm beträgt, teilweise mit flüchtigeren Verbindungen (16, 23) des Speisegases vermischt wird (71), die im Kopfbereich der Fraktionskolonne (15) abgetrennt und erneut verdichtet worden sind (24), so dass die Mischung abgekühlt wird (72, 2b) und als Rückfluss (5) in die Absorptionskolonne (4) geleitet wird, um so das rückfließende Fluid zu bilden und wobei die Fraktionskolonne (15) als Deethanisator fungiert.

2. Verfahren nach Anspruch 1, **dadurch gekennzeichnet, dass** der Hauptstrom des Speisegases (1) vorab in zwei Teilzweigströme (1a, 1b) aufgeteilt wird, von denen einer (1a), der vorab gekühlt (2a) in den unteren Teil der vorstehend genannten Absorptionskolonne (4) eingespeist wird und der andere (1b) vorab gekühlte (2b) einen mittleren Bereich dieser Kolonne (4) speist.

3. Verfahren nach Anspruch 1 oder 2, **dadurch gekennzeichnet, dass** das Bodenprodukt (13) der vorstehend genannten Absorptionskolonne (4), das C₂- und höherkettige Kohlenwasserstoffe und Mercaptane enthält, vorab entspannt wird (14), bevor es in eine Fraktionskolonne (15) eingespeist wird, wodurch ein Entfernen der Mercaptane der flüchtigeren Verbindungen des Speisegases möglich ist.

4. Verfahren nach Anspruch 3, **dadurch gekennzeichnet, dass** das Bodenprodukt (29) der Fraktionskolonne (15), das C₃- und höherkettige Kohlenwasserstoffe und Mercaptane enthält, nach einer Entspannung (30) möglicherweise eine erste Kolonne (31) zur Destillation des Benzins speist, die vorzugsweise als Depropanisator fungiert, und in der das Bodenprodukt (46) C₄- und höherkettige Kohlenwasserstoffe und Mercaptane enthält.

5. Verfahren nach einem der vorangegangenen Ansprüche, **dadurch gekennzeichnet, dass** das Bodenprodukt (46) der ersten Destillationskolonne (31), das C₄- und höherkettige Kohlenwasserstoffe und Mercaptane enthält, nach einer Entspannung (47) in eine zweite Destillationskolonne (48) eingespeist wird, die vorzugsweise als Debutanisator fungiert, und in der das Bodenprodukt (63) die restliche Benzinfraktion enthält, die aus C₅- und höherkettigen Kohlenwasserstoffen und nicht-flüchtigen Mercaptanen besteht.

6. Verfahren nach Anspruch 4, **dadurch gekennzeichnet, dass** das Kopfprodukt (16) der Fraktionskolonne (15), das frei von Mercaptanen ist und C₁-, C₂- und C₃-Kohlenwasserstoffe enthält, mittels partieller Kondensation abgekühlt wird (17) und dann einerseits eine flüssige Phase (21), die in den Kopfbereich der Kolonne (15) rückgeführt wird, und andererseits eine gasförmige Phase (23), die erneut verdichtet wird (24), bevor sie, wie vorstehend angegeben, mit wenigstens einem Teil des finalen Produkts der Destillation der vorstehend genannten Benzinfraktion (63, 66, 70) vermischt wird (71), aufgeteilt (20) wird, wobei der andere Teil extrahiert wird (68).

7. Verfahren nach einem der vorangegangenen Ansprüche, **dadurch gekennzeichnet, dass** das Kopfprodukt (32) der ersten Destillationskolonne (31), das C₃-Kohlenwasserstoffe und Methylmercaptan enthält, mittels einer vollständigen Kondensation abgekühlt wird (33) und dann in zwei Teilfluidströme (35, 37) aufgeteilt wird, von denen der eine (35) in den Kopfbereich der ersten Destillationskolonne (31) rückgeführt wird und der andere (37) einer Enthärtungsbehandlung (39) unterzogen wird, um einerseits das Methylmercaptan (40), insbesondere in Verbindung mit einem Enthärter, zu entfernen und andererseits eine Mischung von C₃-Kohlenwasserstoffen zu erhalten (41), die frei von Mercaptanen ist.

8. Verfahren nach einem der vorangegangenen Ansprüche, **dadurch gekennzeichnet, dass** das Kopfprodukt (49) der zweiten Destillationskolonne (48), das entsprechend. C₄-Kohlenwasserstoffe und die restlichen flüchtigen Mercaptane enthält, mittels einer vollständigen Kondensation abgekühlt wird (50) und dann in zwei Teilfluidströme (52, 54) aufgeteilt wird, von denen der eine (52) in den Kopfbereich der zweiten Destillationskolonne (48) rückgeführt wird und der andere (54) einer Enthärtungsbehandlung (56) unterzogen wird, um einerseits die restlichen flüchtigen Mercaptane zu entfernen (57), insbesondere in Verbindung mit einem Enthärter, und andererseits eine Mischung von Kohlenwasserstoffen als C₄ (58) zu erhalten, die frei von Mercaptanen ist.

9. Verfahren nach einem der vorangegangenen Ansprüche, **dadurch gekennzeichnet, dass** der abzukühlende Teilstrom (1b) des Speisegases (1) und der vorstehend angegebene Rückfluss (5) mit dem Gas (6), das aus dem Kopfbereich der Absorptionskolonne (4) stammt, sowie möglicherweise mit einem zusätzlichen Kühlfluid (7), wie beispielsweise Propan, gekühlt werden (2b), wobei das Gas (6), das die Kolonne (4) verlässt, durch Wärmeaustausch auch bis auf etwa Raumtemperatur erwärmt wird.

10. Vorrichtung zum Durchführen des Verfahrens gemäß einem der Ansprüche 1 bis 9, **dadurch gekennzeichnet, dass** die Vorrichtung eine Druck-Absorptionskolonne (4) aufweist, die mit Zulaufleitungen verbunden ist, die jeweils Speisegas (1a, 1b) und Rückfluss (5) führen, wobei sich die Hauptzulaufleitung (1) des Speisegases (GN) in zwei Zweigleitungen (1a, 1b) aufteilt, von denen die eine (1b) und die Rückflussleitung (5) in der gleichen Richtung einen Wärmetauscher (2b) durchlaufen, und wobei der Kopfbereich der Kolonne mit einer Auslassleitung (6) für das behandelte Gas verbunden ist, die den Wärmetauscher (2b) bevorzugt in der umgekehrten Richtung durchläuft, während der Bodenbereich derselben mit einer Leitung (13) zu einer Fraktionskolonne (15) verbunden ist, wobei der Bodenbereich der Fraktionskolonne mit einer Leitung (29) wenigstens einer Kolonne (31, 48) zur Destillation des Benzins verbunden ist, deren Bodenbereich durch eine Auslassleitung (63, 66, 70) mit einer Druckleitung (23) für die Luft eines Kompressors (24) verbunden ist, dessen Ansaugseite mit einer Leitung (16, 23) zum Kopfbereich der Fraktionskolonne (15) verbunden ist, wobei sich die Auslassleitung (63, 66, 70) und die Druckleitung (23) für die Luft wieder in der Rückflussleitung (5) verbinden (71).

11. Vorrichtung nach Anspruch 10, **dadurch gekennzeichnet, dass** der Kopfbereich der vorstehend angegebenen Fraktionskolonne (15) durch eine Leitung (16), die durch einen Kühler-Kondensator (17) verläuft, mit dem Einlass eines Phasentrenners (20) verbunden ist, dessen Auslass für die gasförmige Phase durch eine Leitung (23) mit der Ansaugseite des vorstehend angegebenen Kompressors (24) verbunden ist, während dessen Auslass für die flüssige Phase durch eine Leitung (21) mit dem darüber liegenden Teil der Fraktionskolonne (15) verbunden ist.

12. Vorrichtung nach Anspruch 11, **dadurch gekennzeichnet, dass** das System zur Destillation des Benzins aus zwei in Reihe geschalteten Destillationskolonnen (31, 48) besteht, wobei die jeweiligen Kopfbereiche jeweils durch eine entsprechende Leitung (32, 49), die durch einen Kühler-Kondensator (33,50) verläuft, mit dem Einlass eines Behälters (34, 51) für Kondensat verbunden sind, wobei der Auslass einerseits in eine Rückflussleitung (35, 52) an dem darüber liegenden Teil der entsprechenden Kolonne (31, 48) mündet und andererseits in eine Abführleitung (37, 54) mündet, die sich zu einer Einrichtung zur späteren Behandlung oder Verwendung hin verzweigt.

13. Vorrichtung nach Anspruch 12, **dadurch gekennzeichnet, dass** die vorstehend angegebene Abführleitung (37), die zur ersten Destillationskolonne (31) gehört, in den Einlass einer Enthärtereinrichtung (39) mündet, bei der ein Auslass (41) mit einem Behältnis für die C₃-Kohlenwasserstoffe verbunden ist, während die vorstehend angegebene Abführleitung (54), die zu der zweiten Destillationskolonne (48) gehört, in ein System (56) zur Enthärtung oder ein System zur Verwendung der C₄-Kohlenwasserstoffe mündet.

14. Vorrichtung nach einem der Ansprüche 10 bis 13, **gekennzeichnet durch** eine Abzweigleitung (68), jeweils für die C₅-und höherkettigen Kohlenwasserstoffe, die in die Auslassleitung (63) des Bodenbereichs der zweiten Destillationskolonne (48) abgezweigt ist.
